# EUROPEAN PATENT SPECIFICATION

(11) **EP 2 121 260 B1**
(45) Date of publication and mention of the grant of the patent: **12.02.2014**
(21) Application number: 08702475.8
(22) Date of filing: 21.01.2008
(51) Int. Cl.: B28D 1/22, C03B 33/10

(54) **CUTTING DISK FOR FORMING A SCRIBED LINE AND METHOD OF MANUFACTURING THE SAME**
SCHNEIDEPLATTE ZUR FORMUNG EINER SCHREIBSPUR UND VERFAHREN ZU SEINER HERSTELLUNG
DISQUE DE COUPE POUR TRAÇAGE D'UNE LIGNE DE DÉCOUPE ET MÉTHODE POUR SA FABRICATION.

(30) Priority: 19.01.2007 ZA 200700584
(43) Date of publication of application: 25.11.2009
(73) Proprietor: Awin Diamond Technology Corporation, Taiwan (CN)
(72) Inventor: TANG, Xiao, NL-5435 XD St Agatha (NL); GODFRIED, Herman Philip, NL-1081 BW Amsterdam (NL); KRIELE, Paulus Adrianus Cornelis, NL-5451 PH Mill (NL)
(74) Representative: Buckley, Guy Julian
(86) International application number: PCT/IB2008/050204
(87) International publication number: WO 2008/087612

(56) References cited:
- EP-A- 1 092 686
- WO-A-2004/082906
- WO-A-2006/009113
- JP-A- 2007 031 200
- JP-A- 2007 152 936
- US-A1- 2003 159 297

## Description

### BACKGROUND OF THE INVENTION

THIS invention relates to a cutting disk according to the preamble of claim 1 which can be used for scribing a line on a surface of a body or object, such as a glass body, a semiconductor, a gem stone, a body of crystalline material or a ceramic body. It also relates to a method of manufacturing such a cutting disk according to the preamble of claim 18.

Such a cutting disk is known from US 2003/0153297 A1 and such a method is known from WO 2004 08 2906 A1.

Cutting or scribing disks are typically supported by a spindle or shaft which is mounted rotatably at one end of a handle or another support member. The edge of the disk is brought into contact with the surface to be scribed and is moved relative to the surface so that the cutting disk rolls over the surface, leaving a scribed line in the surface, along which the object or body can be broken neatly.

By applying a suitable force via the handle or support means, the cutting edge or rim of the scriber disk is caused to generate cracks or grooves in the surface.

Such cutting disks can be used with glass products such as plate glass, window glass, bottles or jars, for example. A particular application of cutting disks of this kind is in scribing lines on flat glass panels used in television screens, computer monitors and other displays, both large and small. Furthermore they can be used to scribe wafers of semiconductor material or ceramics and on precious or semi-precious stones and other crystalline materials such as sapphire and other hard oxides.

Earlier cutting disks used for scribing glass had a continuous rim resulting in a continuous, very neat crack in the glass surface having a fairly shallow depth below the scribing line in the glass. For thin glass plates, disks of this kind are still the most widely used scribing tool. For thicker plates the resulting crack may not be deep enough and consequently the breaking force might be excessively large, the surface could show excessive chipping, or the glass might not break accurately along the scribed line. In all these cases this would result in excessive yield losses and require major adjustments to avoid interruption of the production process.

EP 1 092 686 describes a glass cutting disk or wheel which is beveled at its periphery to define a circumferential ridge in which teeth or protrusions are formed, with depressions or hollows between the teeth. When the scriber wheel is drawn over a glass surface the teeth contact the glass surface sequentially, causing intensified pressure on the glass surface at the point of contact and causing a deeper so-called median crack prior to breakage.

The depressions or hollows between the teeth or projections do not define sharply intersecting surfaces and therefore they do not contribute to the scribing of the glass. In fact the bottoms of these depressions or hollows generally are not in contact with the glass during the scribing process. In this regard, it can be noted that the cutting disk generally only penetrates the glass for a few microns while the hollows are typically 10 microns deep.

Due to the fact that at any instance in time several teeth are penetrating the glass, a propagating crack is caused in the glass from one tooth to the next which thus gives a continuous crack along a line defined by the rolling path of the cutting disk over the glass surface. The propagating crack, resulting from the scribing action and the pressure exerted by the cutting disk, can go several hundreds of microns deep into the glass. However the crack shows a typical pattern of purely line cracks (where the bottoms of the hollows have moved above the surface of the glass) and areas where in addition to the cracks the glass has been pushed aside by the teeth. Around these areas the glass also shows an undesirable phenomenon of lateral cracks propagating from the edges of the pushed away areas. As a consequence after breakage the edges of the resulting glass plates may need to be ground to remove the cracked areas. Furthermore there is some undesirable chipping around these areas and the initial crack which has propagated in between the teeth is not always straight, or is sometimes not just a single line crack but consists of multiple line cracks, and may give rise to deviations of the crack once it propagates into the depth of the glass.

It is an object of the invention to provide an alternative cutting or scribing disk, that addresses at least some of the above issues.

### SUMMARY OF THE INVENTION

The present invention, in its various aspects, is as set out in the accompanying claims.

According to the invention there is provided a cutting disk for forming a scribed line on a surface of a body or object, the cutting disk comprising a generally disk shaped body having a peripheral portion comprising first and second circumferentially extending tapered surfaces that converge radially outwardly, the peripheral portion defining a scribing edge having adjacent raised and recessed circumferentially extending cutting elements, with a plurality of outwardly extending grooves being formed in the first and second tapered surfaces, the outer ends of opposed grooves in the respective tapered surfaces being aligned to defme between them the recessed cutting elements.

Thus, the scribing edge defined by the cutting disk is a continuous sharp edge having alternating raised and recessed cutting elements, aligned circumferentially with one another.

The body or object may be, for example, a glass body, a semiconductor, a gem stone, a body of crystalline material or a ceramic body.

The outwardly extending grooves may be aligned radially or may be inclined relative to a radius of the cutting disk.

The grooves may be of equal width and depth, or may have varying widths and/or depths.

The spacing between adjacent grooves may be regular or irregular.

Preferably, the grooves have a depth which increases in a direction radially outwardly towards the periphery of the cutting disk, with the grooves having a maximum depth adjacent the recessed cutting edges.

The width of the grooves may be constant along their length, or may vary.

In the latter embodiment, the material of the opposed tapered surfaces at the periphery of the disk is preferably removed selectively to define raised cutting edges having a curved profile, so that the overall scribing edge of the cutting disk has a sinuous profile.

The sinuous profile may correspond to a sine wave or another periodic shape.

The cutting disk may comprise one of a number of hard materials, including sintered or cemented diamond grit. In the former case cobalt can be used as a binder, while in the latter case SiC may be used as a binder, for example.

Where the cutting disk comprises diamond grit, the grit preferably has a size smaller than 3 µm, more preferably smaller than 1.5µm, even more preferably less than 1 µm and most preferably smaller than 0.8µm.

The cutting disk may comprise other hard materials, including (but not limited to) single crystal diamond or polycrystalline diamond.

Further according to the invention there is provided a method of manufacturing a cutting disk for forming a scribed line on a surface of a body or object, the method comprising:
supporting a disk shaped blank having a peripheral portion comprising first and second circumferentially extending tapered surfaces that converge radially outwardly;
generating a focused light beam from a laser source;
masking the light beam according to a predetermined cutting pattern;
focusing the light beam onto the blank; and
moving the blank and the light beam relative to one another to cause the light beam to form a plurality of outwardly extending grooves in the first and second tapered surfaces, the outer ends of opposed grooves in the respective tapered surfaces being aligned to define between them recessed cutting elements with raised cutting elements between them so that the peripheral portion of the cutting disk defines a scribing edge having adjacent raised and recessed circumferentially extending cutting elements, aligned circumferentially with one another.

### BRIEF DESCRIPTION OF THE DRAWINGS

Figure 1 is a pictorial view of a first embodiment of a cutting disk according to the invention;
Figures 2 and 3 are partial side and isometric views, respectively, of the cutting disk of Figure 1;
Figures 4 and 5 are partial side and isometric views, respectively, of a second embodiment of a cutting disk;
Figures 6 and 7 are partial side and isometric views, respectively, of a third embodiment of the cutting disk;
Figures 8 and 9 are partial side and isometric views, respectively, of a fourth embodiment of the cutting disk;
Figures 10, 11 **and 12** are a partial side view, an isometric view and an end view, respectively, of a fifth embodiment of the cutting disk; and
**Figure 13** is a schematic diagram of apparatus used to manufacture the cutting disks.

### DESCRIPTION OF EMBODIMENTS

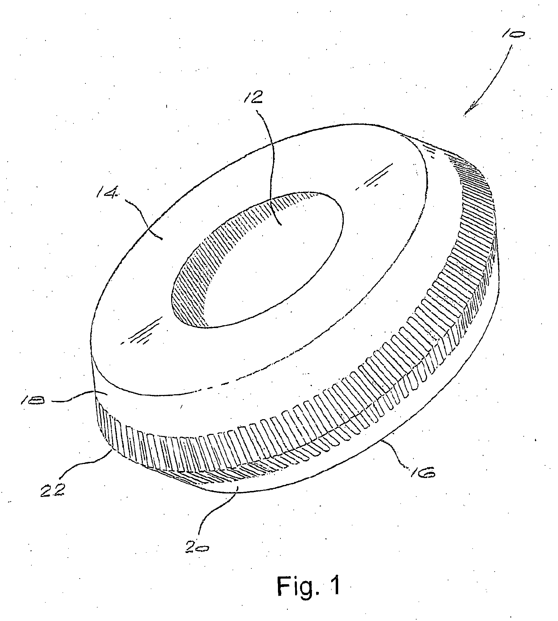

Figures 1 to 3, 4 and 5, 6 and 7, 8 and 9, and 10, 11 and 12 show five different embodiments of cutting disks (also referred to as scriber wheels) according to the present invention. The prototype cutting disks were manufactured from sintered diamond grit, which was sintered using a cobalt binder. This material is sometimes referred to as cobalt-cemented diamond. Another preferred material, used in certain embodiments, is cemented diamond, using a SiC binder. It will be appreciated by those skilled in the art that the cutting disks could be manufactured from other known materials, including single crystal diamond (natural or synthetic), polycrystalline diamond such as CVD-grown polycrystalline diamond, cubic boron nitride, tungsten carbide, sapphire, or other hard crystalline and cemented and sintered materials.

Referring first to Figures 1, 2 and 3, a first embodiment of the cutting disk comprises a disk-shaped diamond body 10 with a central hole 12 which can receive a supporting shaft or spindle. The cutting disk has opposed planar end surfaces 14 and 16. In a peripheral portion of the disk, first and second conically tapered or beveled surfaces 18 and 20 are formed which converge radially outwardly towards a scribing edge 22. The manner in which the scribing edge 22 is formed is described in greater detail below.

The cutting disk typically has a diameter in the range from 1 to 20mm, a thickness in the range from 0.4 to 5mm, and an angle of convergence between the first and second tapered surfaces 18 and 20 of 80 to 160 degrees.

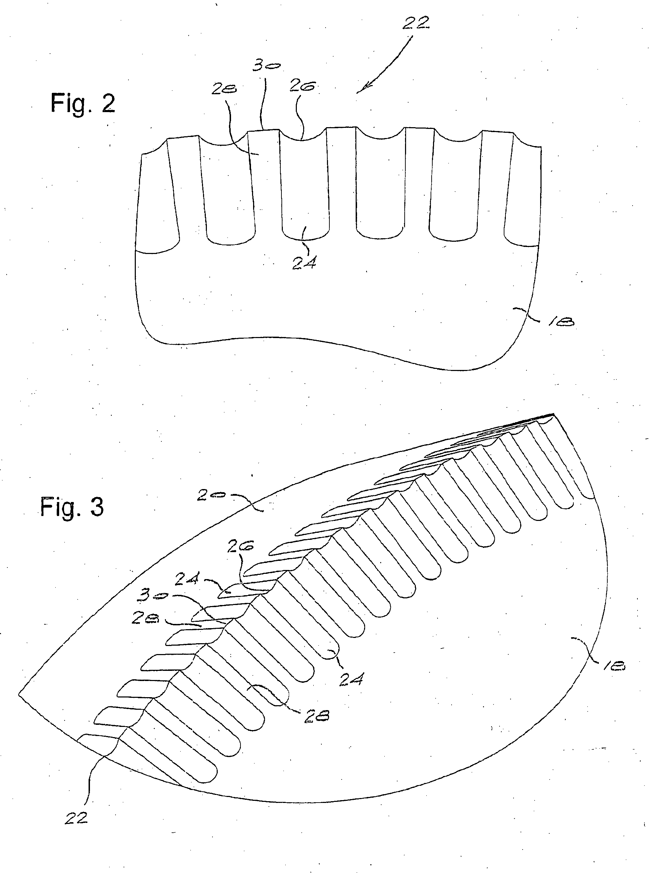

Figures 2 and 3 are partial sectional and isometric views, respectively, of the peripheral portion of the cutting disk of Figure 1, showing the scribing edge 22 more clearly.

Formed in the outermost portions of the tapered surfaces 18 and 20 are a number of grooves 24 which extend radially outwardly to the scribing edge 22. Corresponding grooves 24 on the tapered surfaces 18 and 20 are aligned and define at their line of intersection recessed cutting elements 26 which have a concave curvature. In other embodiments, the recessed cutting elements defined at the line of intersection may be convexly (or more complexly) curved, or they may be straight. Between the grooves 24 are lands 28 which also extend radially outwardly and which intersect to define a raised cutting element 30 with a slight convex curvature corresponding to the circumferential curvature of the disk-shaped body 10. Again, the shape of the raised cutting elements 30 may be different in other embodiments. The grooves and lands alternate as illustrated, so that the scribing edge 22 comprises a series of alternating raised and recessed cutting elements, defining a continuous circumferentially extending scribing edge.

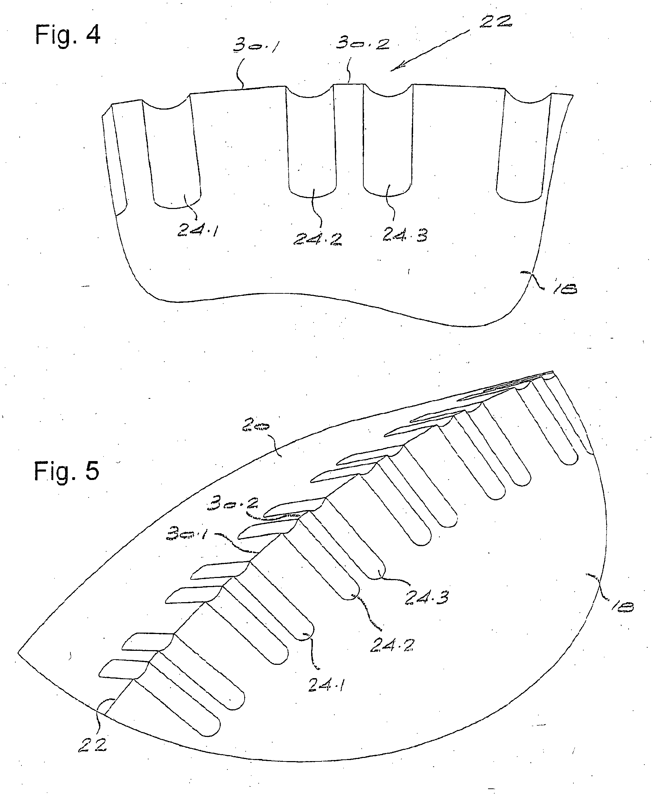

Figures 4 and 5 show a variation of the embodiment of Figures 1 to 3, in which the spacing between adjacent grooves 24 is uneven or irregular. As best seen in Figure 4, the spacing in the direction of the circumference of the cutting disk between the grooves 24.1 and 24.2 is greater than the spacing between the grooves 24.2 and 24.3. As a consequence of this, the length of the raised cutting element 30.1 is correspondingly greater than that of the raised cutting element 30.2.

The spacing between the grooves can be staggered, as illustrated in the embodiment of Figures 4 and 5, with alternate spacings being greater or smaller, or could follow a more complex pattern having a periodic, quasi-periodic or pseudo random nature, for example.

In the case of a cutting disk which has a short periodicity in the groove spacing (for instance one which has alternating smaller and larger distances between grooves) the applicability of such a cutting disk for different scribing jobs is enhanced with respect to the prior art cutting disks, and also cutting disks according to this invention with equal groove spacing. For cutting disks with equal groove spacing it is usual to use different cutting disks with different scribing settings for different types and thicknesses of the objects or bodies to be scribed. For example, a cutting disk which is used to scribe a glass panel with a thickness of 0.5 mm with certain settings for scribing pressure, scribing speed and requirements on scriber lifetime and process quality, and yield in general, cannot be used with the same settings, lifetime and process quality and yield for a panel made from the same glass with a thickness of 0.4 mm. The above described embodiment with non-equidistant grooves allows optimization for more glass types or thicknesses in one cutting disk at the same time, because of the different depth and shape of the impressions depending on the distances between grooves.

In the case of a cutting disk which has a long periodicity in the groove spacing (for instance a cutting disk which has a constant distance over one half its cutting ridge and a different but again constant distance over the second half, or similarly a sinusoidal variation of the groove distance with a period equal to the circumference of the cutting disk) the resulting median crack has a different depth with a periodicity equal to the circumference (approx 6.3 mm for a 2 mm diameter cutting disk in the example given) of the cutting disk. When scribing glass panels, for example, and for certain settings of the scribing pressure and the scribing speed, this allows a median crack to be obtained which is so deep that the resulting propagated crack has completely or nearly completely propagated through the thickness of the glass in sections where the median crack was relatively deep, while in other sections, where the median crack was relatively shallow, the propagated crack still did not propagate through or as close to the opposite surface.

Thus the advantage over the first embodiment lies in the fact that with the cutting disk having unequally spaced grooves one does not need very accurate control over the propagated depth, which is necessary for the prior art cutting disks and the cutting disks according to this invention with equally spaced grooves. Instead, for the cutting disks with non-equidistant grooves the normal process variation only results in larger or smaller sections, where the crack has propagated to or near to the opposite surface, but accurate breaking after scribing is possible in a larger window of scribing settings as compared to the prior art cutting disks and the cutting disks according to this invention with equally spaced grooves.

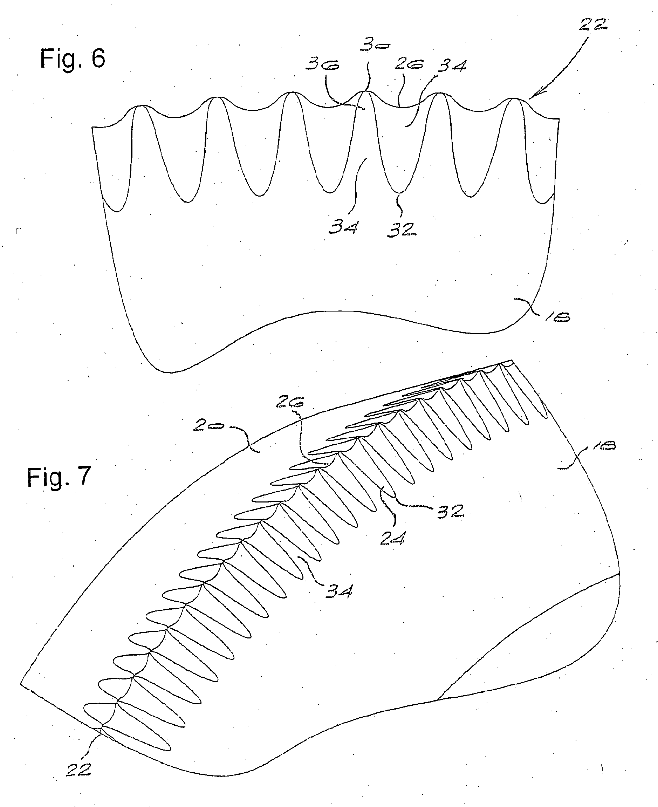

A third embodiment of a cutting disk according to the present invention is shown in Figures 6 and 7. In this embodiment, the grooves 24 have an inner end 32 and an outer end defining the recessed elements 26 of the scribing edge 22.

Between adjacent grooves 24 are lands 34, the outermost ends 36 of which are chamfered or cut away on either side of a central, radially extending line to define a sine-shaped ridge. The outermost end of the land is cut away so that the raised cutting element 30 has a sinusoidally curved shape, defining a sharp circumferentially extending raised edge which is continuous with the adjacent recessed cutting element 26. Thus, the scribing edge defined by this embodiment of the cutting disk has an undulating, generally sinusoidal or "wavy" shape in profile, but which is continuous and sharp edged both at the peaks of the raised cutting elements and the lowermost portions of the adjacent recessed cutting elements. This can best be seen in Figure 7.

At the outermost ends 36 of the lands 34, in between the grooves 24, the width of the lands tapers to a point in the plane of the tapered surfaces 18 and 20.

The shape of the undulating or "wavy" scribing edge may be truly sinusoidal, quasi or partially sinusoidal, or may have a complex periodic or quasi periodic shape, for example. This shape is influenced by the spacing between the adjacent grooves 24, as well as the shaping of the raised cutting elements themselves.

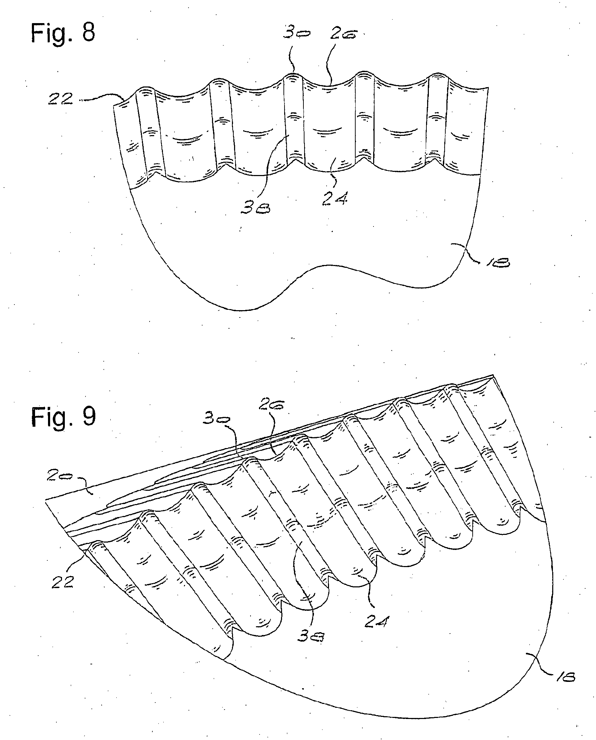

Figures 8 and 9 show a fourth embodiment of a cutting disk according to the invention. In this embodiment, the grooves 24 have a width which increases slightly towards the periphery of the cutting disk, and a concave curvature in the direction of the circumference of the cutting disk, which corresponds to the concavely curved shape of the recessed cutting elements 26 at the scribing edge 22 of the cutting disk. Between adjacent grooves 24 are radially extending ridges 38 which have a convex curvature at their peaks which corresponds to the convexly curved shape of the raised cutting elements 30 at the scribing edge 22. It will be appreciated that the curvature of the adjacent grooves and ridges defines the curvature of the corresponding recessed and raised cutting elements at the scribing edge of the cutting disk, where the grooves and ridges on the opposed tapered surfaces 18 and 20 meet.

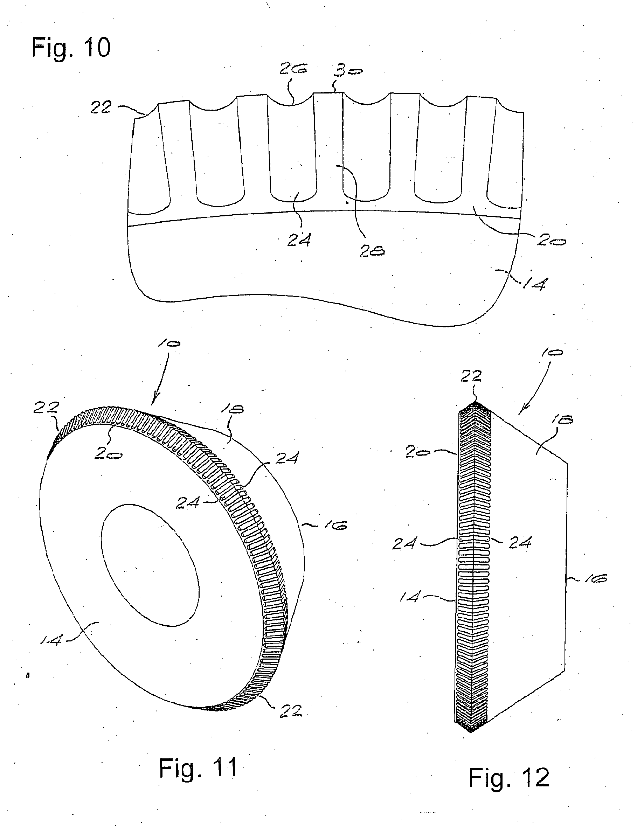

Figures 10, 11 and 12 show another variation of the embodiment of Figures 1 to 3, in which the scribing edge or cutting ridge is asymmetrically disposed between the opposed planar end surfaces 14 and 16. In a peripheral portion of the disk first and second conically tapered or beveled surfaces 18 and 20 are formed which converge radially outwardly towards a scribing edge 22. In this embodiment the intersection of the conically tapered or beveled surface 18 with the planar surface 14 is a circle with a radius that is larger than the radius of the circle defined by the intersection of the conically tapered or beveled surface 20 with the planar surface 16. The angles between the conically tapered surfaces 18 and 20, respectively, and a plane through their intersection are made to be approximately equal. As a result the scribing edge 22 is displaced from a plane midway between the opposed end surfaces 14 and 16 towards the planar end surface 14.

As in the first embodiment illustrated in Figures 1 to 3, a number of grooves 24 are formed in the outermost portions of the tapered surfaces 18 and 20, which extend radially outwardly to the scribing edge 22. Corresponding grooves 24 on the tapered surfaces 18 and 20 are aligned and define at their lines of intersection recessed cutting elements 26 which have a concave curvature. In other embodiments, the recessed cutting elements defined at the line of intersection may be convexly (or more complexly) curved, or they may be straight. Between the grooves 24 are lands 28 which also extend radially outwardly and which intersect to define a raised cutting element 30 with a slight convex curvature corresponding to the circumferential curvature of the disk-shaped body 10. The grooves and lands alternate as illustrated, so that the scribing edge 22 comprises a series of alternating raised and recessed cutting elements, defining a continuous circumferentially extending scribing edge.

This embodiment can be used, for example, to scribe lines on wafers or other brittle substrates carrying multiple semiconductor devices, to separate the devices. The asymmetric location of the scribing edge 22 towards one face of the cutting disk makes it possible to scribe a line closer to a structure or feature on the wafer or substrate than would be possible with a symmetrical cutting disk with a similar overall thickness, which is needed for adequate strength of the cutting disk.

When using prior art cutting wheels it was found to be a problem to obtain high quality cut panels when scribing curved lines. In JP2000-219527 a disk shaped cutting disk or scriber wheel is disclosed which addresses this problem by forming grooves at the blade edge ridgeline of the wheel, which are inclined at a prescribed angle with respect to the axial central direction of the wheel. However when scribing curved lines with cutting disks according to the present invention it was found that, due to the continuous scribing edge of such disks and the gentle spreading of the material by the cutting elements of these disks, the problem observed in scribing prior to JP2000-219527 was reduced significantly. In particular, the lateral cracking which occurs when using prior art cutting disks was nearly absent when using cutting disks or scriber wheels of the third or fourth embodiment of this invention, where the sinuous scribing edge allowed for easy curved scribing and a high edge quality after breaking the material. For larger radii of curvature, the first, the second and the fifth embodiments described herein also produced high quality curved edges after breaking.

The preferred method of manufacturing the cutting disks of the present invention involves producing the grooves in the tapered peripheral portions of the cutting disk by projecting a laser through a mask onto the tapered surfaces of the cutting disk, with the direction of propagation of the light substantially perpendicular to the axis of the cutting wheel and in a radial direction. By rotating the cutting wheel around its axis through a predetermined angle and then again exposing the cutting wheel to the laser light a periodic or quasi-periodic pattern of grooves can be effected in the tapered portions. In one embodiment the projection of the mask on the cutting wheel is held stationary while in others the mask projection is scanned over the tapered surfaces, thus effecting a profile in the grooves which can have a variation in depth related to the time of exposure to the laser light. Preferably the laser used in this method is a UV laser with a substantially flat intensity profile in the plane of the mask, and preferably projection of the light propagating through the mask is effected by a lens designed to project a de-magnified image of the mask onto an image plane in which the tapered portions of the cutting disk are held. By devising a mask whose image simultaneously projects identically shaped illuminated areas onto several cutting wheels at a time this method provides for a small batch processing capability.

The prototype cutting wheels of the invention were manufactured using sintered diamond grit. By using diamond material with a very small grain, the effect of "chipouts" is reduced and the accuracy of the shape, especially for cutting edges with a small radius of curvature is improved. Therefore the lifetime of the sintered diamond cutting disks is improved. Preferably, a newly developed cemented diamond material, consisting of diamond grit which is cemented with SiC, is used for the cutting wheel, which has the advantage that the spaces between the diamond grains are filled with a material which is almost as hard as diamond and therefore the difference in hardness of the diamond and binder is much smaller than in traditional cemented diamond. This has resulted in an even higher wear resistance for these cutting wheels than for the prior art sintered or cemented diamond cutting wheels.

In manufacturing the prototype cutting disks of the invention, cutting disks, which were shaped similarly to prior art disks, but in some cases were fabricated from small grain diamond grit or used SiC binder to exploit the higher wear resistance of these materials, were used as blanks. Such a prior art cutting disk is characterized as being a flat round disk with a central hole and beveled or tapered portions intersecting at an outer peripheral ridge, defining the cutting or scribing edge of the prior art cutting disk. All surfaces, including the surface of the central hole, could either be ground or polished resulting in a roughness with a root-mean-square value substantially below 10 µm, and in most cases substantially below 1 micron. Certainly the beveled portions exhibited a low roughness, with a root-mean-square value typically less than 1 µm, as it was a design requirement that their intersection had to form a well defined cutting edge with a radius of less than 3 µm.

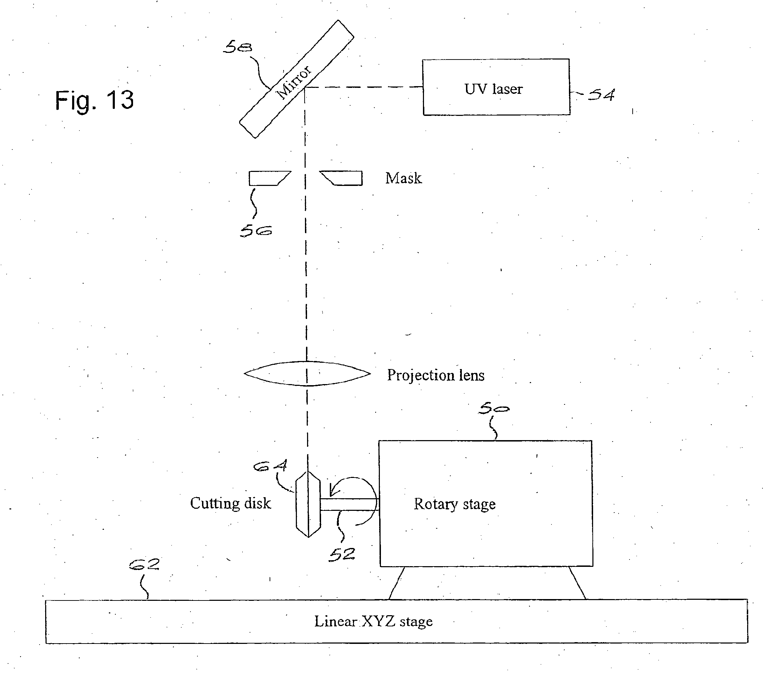

Figure 13 shows in simplified schematic form the arrangement of apparatus used to manufacture the above described cutting disks. The apparatus includes a rotary stage 50 comprising a stepping motor in combination with a reduction gearbox, capable of making steps with an accuracy and repeatability of less than 0.01 degrees. Alternatively, a DC or a synchronous motor with encoder in combination with a gearbox could be used, for example. A shaft 52 can be mounted onto the rotary stage and cutting wheel blanks are then mounted on the shaft, which passes through their central hole.

A UV laser workstation was provided, comprising a KrF laser 54 capable of producing pulsed UV radiation at 248 nm of up to 400 mJ with a near-top hat-type intensity distribution at a repetition rate of up to 250 pulses per second. Light from the laser 54 is guided to a mask 56 by means of a beam shaping system including mirrors, lenses and optionally other beam shaping optics, represented schematically in Figure 13 by a mirror 58. Subsequently the light transmitted through the mask is projected onto the cutting disk by means of a specially designed projection lens 60 which effected an approximately 20x de-magnified image of the mask on the cutting disk. With different projection lenses de-magnification values of between 10 and 30x could be achieved. Typical fluence in the image plane of the projection lens is between 1 and 5 Joule/cm² in pulses with a duration of the order of 10-20 ns. The rotary stage holding the cutting disk was mounted on a work stage 62 whose height and position in the XY plane perpendicular to the direction of the incident light could be controlled by means of a digital computer.

After chemical cleaning to remove dust and residual dirt from their surfaces, cutting disk blanks 64 were mounted onto the shaft of the rotary stage. Cutting wheels were then manufactured by repeatedly exposing the cutting disk blanks to the laser light transmitted through the mask and then stepping the rotary stage to a new position, thereby forming the grooves 24 and, where applicable, shaping the end portions 36 of the raised cutting elements 30.

When exposing the cutting disk to the laser light the mask image was projected onto the beveled or tapered portions of the cutting disk, in a direction aligned with a radius of the cutting disk blank. In some cases the mask image coincided with the full area of the groove, and the depth of the groove was then determined by the number of laser pulses these beveled portions were exposed to.

In other cases the work stage was moved in a linear fashion in the XY plane so as to expose a track on the beveled or tapered surface of the cutting disk and again forming a groove whose local depth was determined by the pulse energy of the laser, the pulse repetition rate of the laser, the speed of the scanning movement and the shape of the mask. The major advantage of this method was the simple alignment of the cutting disk in the workstation since the depth of the grooves is not determined by narrow tolerances on positioning of a laser or tooling with respect to the cutting disk, but by the duration of exposure to the laser light. The position of the grooves is also not critical since this is simply determined by a moderately accurate rotary stage.

In some cases cutting disks were produced sequentially in a step and repeat process by mounting several cutting disk blanks on a single shaft and exposing the beveled portions of the cutting disk blanks to the laser light in a sequential manner. Again no alignment was necessary in between exposing different cutting disk blanks other than approximately finding the middle plane of one of the blanks and measuring the average thickness of the disks. Also, the small variation in diameter of the disks (typically of the order of 10 to 20 µm) was unimportant and did not necessitate realignment as would be necessary when producing the prior art cutting disks.

In other cases masks were used which projected multiple identical images onto the beveled portions of several cutting disks, which again were mounted on a single shaft, thus simultaneously exposing the cutting disk blanks to the laser light and simultaneously producing the grooves. This allowed for a small batch processing capability, where again use was made of the low requirements on alignment to accommodate individual variation in dimensions and positions of the cutting disks.

Alternatively, masks were used which projected multiple images onto one or more disks at the same time, thus providing for simultaneous processing of more than one groove on each cutting disk. This allowed processing of different shapes for different grooves or for different depth of individual grooves, or simply allowed different spacings between adjacent grooves. The latter could also be achieved by varying the step size of the rotary stage.

In the prior art method it is very difficult to produce cutting disks with features much smaller than the size of the focal spot of the laser or the thickness of the grinding wheel. With the described mask projection laser method it is easily possible to produce features on the cutting edge with dimensions of less than 10 µm and accuracy of depth of better than 1 µm, where again the alignment tolerance is not critical.

By varying the conditions of the UV exposure differently shaped grooves could be produced. Thus it was possible to vary the shape of the mask and the scan speed of the XY-stage, in combination with the repetition rate of the pulsed UV-laser, to get cutting disks with sinusoidally shaped scribing edges and with U-shaped, triangular or rectangular grooves. The number of grooves could easily be changed by changing the mask size and shape in combination with the demagnification factor of the projection lens and the angular step size of the rotary stage.

Also with the current method it was possible to independently vary the depth and shape of the grooves without simultaneously changing their width by simply adjusting the number of laser light pulses the cutting disk blank was exposed to. This illustrates the freedom the current method provides in the design of the cutting disk to obtain optimal performance for scribing. For glass scribing the latter may depend on various factors, such as glass type, glass thickness, scribing load, scribing speed, desired process yield and reliability and many more that are known to those skilled in the art.

Thus it was possible to produce differently shaped cutting disks which showed improved scribing performance when using them to scribe and break glass plates. The best performance was achieved with a disk where the cutting edge showed a sinusoidal variation in height with the top of the sinus coinciding with the original peripheral ridge of the blank. For glass scribing the scribed line showed decreased lateral cracks and, after breaking the glass, the stressed zone as seen through a microscope with crossed polarizers was seen to be smaller in extent and to have smaller stress. Also it was found that the roughness of the edge after breaking was reduced and less glass dust was produced. Similar improvement was found for scribing of other materials than glass.

Subsequently it was found from modeling of the penetration of the cutting disk into the surface of a glass object, a body of semiconductor material, a gem stone, a body of crystalline material or a ceramic body during the scribing that a gentler spreading of the scribed material, compared with prior art cutting disks having teeth with non-cutting hollows between them, is responsible for the improved performance. Another factor contributing to the improved scribing performance is the extension of the cutting edge into the grooved regions or hollowed regions, which in the prior art cutting disks did not contribute to the scribing because they did not define a sharp cutting edge in the depressed portions of the peripheral ridge.

Although best performance was achieved with a cutting disk with a sinusoidal variation in height of the cutting edge, simple grooved cutting disks also performed well, and better than the prior art cutting disks, due to the gentler spreading of the scribed material and the extension of the cutting edge to the area of the grooves, that is, the provision of a continuous cutting edge. Grooves could be made which had a circular or elliptical cross section, or more complicated shapes such as a triangular shape. Also, grooved disks were made in which the distance between the grooves was variable over the perimeter of the cutting disk.

The number of grooves could easily be varied and cutting disks were produced with numbers of grooves varying between 100 and 200 grooves, depending on the application and the size of the cutting disk. For some applications, a greater or smaller number of grooves may be required.

Different types of cutting disks were produced starting from different sintered or cemented diamond materials. Cobalt sintered diamond material has been used in the prior art but it was found that improved wear resistance could be obtained using very fine sub-micron diamond grit particles in the sintered material, which was due to the smaller size of the volumes between the diamond particles filled with metal binder and the smaller size of the diamond particles. If such a particle, through wear of the binder or excessive local force on the particle, chips out of the cement matrix, the resulting void had a much smaller effect on the resulting scribing quality than in the case when sintered diamond was used with larger particles. Thus it was found that also for cutting disks shaped according to the prior art substantial wear resistance improvement could be obtained when using smaller size diamond grit, with a size preferably smaller than 3 µm and more preferably smaller than 1.5 µm, and even more preferably smaller than 1 µm and most preferably smaller than 0.8 µm. The same held true for the cutting disks according to the present invention in that best performance was obtained with the smallest size grit.

It was also found that considerable improvement in the wear resistance of cutting disks could be obtained by using a harder, more wear resistant binder. Thus improved wear resistance, as compared to sintered or cemented diamond material with a traditional metal binder and with similar size grit, for cutting disks shaped both according to the prior art or according to the shape of the current invention was obtained for cemented diamond using a SiC binder, such as produced by Element Six Ltd of Springs, South Africa.

### Examples

### 1. Cutting disk with 110 grooves and sharp cutting edge using fine-grained, cobalt-bonded sintered diamond

Cutting disk blanks with a continuous peripheral ridge, shaped according to the prior art, were prepared using fine-grained, cobalt-bonded sintered diamond. The size of the diamond grit used was substantially below 1 µm. A plate of this material was first polished to a thickness of 0.6 mm, then cylinders were cut out with a central hole using electric discharge machining and on each of these cylinders tapered or beveled conical sections with a total included angle of 125° were subsequently polished on both sides that intersected at a peripheral ridge. The radius of curvature at the intersection was substantially below 1 µm. The cutting disk blanks had a central hole of 0.8 mm and a diameter of 2.0+/- 0.02 mm. Five of these disks, shaped according to the prior art, were cleaned to remove adhering dust and contamination and subsequently mounted on a shaft with a diameter of 0.78 mm and placed in the rotary stage. Alignment was simply done by searching for the cutting edge of the middle disk and centering that cutting edge with respect to the UV-laser image. A mask with a sinusoidal opening was placed in the light path of the UV laser beam and UV laser light was projected onto the beveled portions of the cutting disk with the incident light being substantially perpendicular to the axial direction of the rotary stage shaft. The laser fluence on the cutting disk surface was approx. 2 J/cm² with a pulse repetition rate of 50 pulses per second. A 15X de-magnifying objective lens was used to project an image of the mask onto the cutting disk. While the laser light was incident on the cutting disks they were translated with a speed of approx. 4 mm/min along a direction parallel to the rotary stage axis over a distance of approx. 0.3 mm to obtain a 0.32 mm long groove. After a groove had been made, the laser discharge was switched off and the rotary stage was stepped over an angle of approx. 3.27°. Subsequently another groove was made and this process was then repeated until a cutting disk was produced with grooves all over its conical sections. In this manner all five cutting disks were processed. The resulting cutting edges had a sinusoidal shape with a period of approx. 57 µm and for one of these cutting disks a height difference was measured with a 100x objective microscope and a calibrated digital camera between the highest and lowest points on the cutting edge of 7.5+/- 0.5 µm. Similar values were found for all other cutting disks. These disks were subsequently used in tests to evaluate their cutting performance on glass plates of 0.6 mm thickness, and substantially decreased lateral cracking, improved straightness of the intermediate cracks, reproducible crack depth and reduced chipping of the glass plate edge were observed with respect to the prior art cutting performance on these plates.

### 2. Cutting disk with 110 evenly spaced grooves and sharp cutting edge using fine-grained, cobalt-bonded sintered diamond

Cutting disk blanks with a continuous peripheral ridge, shaped according to the prior art, were prepared using fine-grained, cobalt-bonded sintered diamond. The size of the diamond grit used was substantially below 1 µm. A plate of this material was first polished to a thickness of 0.65 mm, then cylinders were cut out with a central hole using electric discharge machining and on each of these cylinders beveled conical sections with a total included angle of 125° were subsequently polished on both sides that intersected at a peripheral ridge. The radius of curvature at the intersection was substantially below 1 µm. The cutting disks had a central hole of 0.8 mm and a diameter of 2.0+/- 0.02 mm. Four of these disks, shaped according to the prior art, were cleaned to remove adhering dust and contamination and subsequently mounted on a shaft with a diameter of 0.78 mm and placed in the rotary stage. Alignment was simply done by searching for the cutting edge of the first disk and centering that cutting edge with respect to the UV-laser image. A mask with a circular opening was placed in the light path of the UV laser beam and UV laser light was projected onto the beveled portions of the cutting disk with the incident light being substantially perpendicular to the axial direction of the rotary stage shaft. The laser fluence on the cutting disk surface was approx. 4 J/cm² with a pulse repetition rate of 100 pulses per second. A 20X de-magnifying objective lens was used to project an image of the mask onto the cutting disk. While the laser light was incident on the cutting disks, they were translated with a speed of approx. 6 mm/min along a direction parallel to the rotary stage axis over a distance of approx. 0.3 mm to obtain a 0.32 mm long groove. After a groove had been made, the laser discharge was switched off and the rotary stage was stepped over an angle of approx. 3.27°. Subsequently another groove was made and this process was then repeated until a cutting disk was produced with grooves all over its conical sections. In this manner all four cutting disks were processed. The resulting cutting edges had a circular shape with a center-to-center groove distance of approx. 57 µm. Groove width was 34 µm. For one of these cutting disks a height difference was measured with a 100x objective microscope and a calibrated digital camera between the highest and lowest points on the cutting edge of 8.7 +/-0.5 µm. Similar values were found for the other cutting disks. These disks were subsequently used in tests to evaluate their cutting performance on glass plates of 0.6 mm thickness, and substantially decreased lateral cracking, improved straightness of the intermediate cracks, reproducible crack depth and reduced chipping of the glass plate edge were observed with respect to the prior art cutting performance on these plates.

### 3. Cutting disk with 110 unevenly spaced grooves and sharp cutting edge using fine-grained, cobalt-bonded sintered diamond

Cutting disk blanks with a continuous peripheral ridge, shaped according to the prior art, were prepared using fine-grained, cobalt-bonded sintered diamond. The size of the diamond grit used was substantially below 1 µm. A plate of this material was first polished to a thickness of 0.65 mm, then cylinders were cut out with a central hole using laser cutting and on each of these cylinders beveled conical sections with a total included angle of 125° were subsequently polished on both sides that intersected at a peripheral ridge. The radius of curvature at the intersection was substantially below 1 µm. The cutting disks had a central hole of 0.8 mm and a diameter of 2.0+/- 0.02 mm. Four of these disks, shaped according to the prior art, were cleaned to remove adhering dust and contamination and subsequently mounted on a shaft with a diameter of 0.78 mm and placed in the rotary stage. Alignment was simply done by searching for the cutting edge of the first disk and centering that cutting edge with respect to the UV-laser image. A mask with two adjacent circular openings was placed in the light path of the UV laser beam and UV laser light was projected onto the beveled portions of the cutting disk with the incident light being substantially perpendicular to the axial direction of the rotary stage shaft. The laser fluence on the cutting disk surface was approx. 4 J/cm² with a pulse repetition rate of 100 pulses per second. A 20X de-magnifying objective lens was used to project an image of the mask onto the cutting disk. While the laser light was incident on the cutting disks, they were translated with a speed of approx. 4 mm/min along a direction parallel to the rotary stage axis over a distance of approx. 0.3 mm to obtain a 0.32 mm long groove. After a double groove had been made, the laser discharge was switched off and the rotary stage was stepped over an angle of approx. 6.55°. Subsequently another pair of grooves was made and this process was then repeated until a cutting disk was produced with grooves all over its conical sections. In this manner all four cutting disks were processed. The resulting cutting edges had an elliptical shape with a period of approx. 114 µm and a center-to-center groove distance alternating between 53 and 61 µm. Groove width was 34 µm. For one of these cutting disks a height difference was measured with a 100x objective microscope and a calibrated digital camera between the highest and lowest points on the cutting edge of 13.5 +/-1 µm. Similar values were found for the other cutting disks. These disks were subsequently used in tests to evaluate their cutting performance on glass plates of 0.6 mm thickness, and substantially decreased lateral cracking, improved straightness of the intermediate cracks, reproducible crack depth and reduced chipping of the glass plate edge were observed with respect to the prior art cutting performance on these plates.

### 4. Cutting disk with 140 evenly-spaced grooves and sharp cutting edge using fine-grained, cobalt-bonded sintered diamond

Cutting disk blanks with a continuous peripheral ridge, shaped according to the prior art, were prepared using fine-grained, cobalt-bonded sintered diamond. The size Of the diamond grit used was substantially below 1 µm. A plate of this material was first polished to a thickness of 0.65 mm, then cylinders were cut out with a central hole using electric discharge machining and on each of these cylinders beveled conical sections with a total included angle of 115° were subsequently polished on both sides that intersected at a peripheral ridge. The radius of curvature at the intersection was substantially below 1 µm. The cutting disks had a central hole of 0.8 mm and a diameter of 2.2+/- 0.02 mm. Three of these disks, shaped according to the prior art, were cleaned to remove adhering dust and contamination and subsequently mounted on a shaft with a diameter of 0.78 mm and placed in the rotary stage. Alignment was simply done by searching for the cutting edge of the middle disk, focusing on it, and centering that cutting edge with respect to the UV-laser image. A mask with a round opening was placed in the light path of the UV laser beam and UV laser light was projected onto the beveled portions of the cutting disk with the incident light being substantially perpendicular to the axial direction of the rotary stage shaft. The laser fluence on the cutting disk surface was approx. 4 J/cm² with a pulse repetition rate of 70 pulses per second. A 20X de-magnifying objective lens was used to project an image of the mask onto the cutting disk. While the laser light was incident on the cutting disks they were translated with a speed of approx. 6 mm/min along a direction parallel to the rotary stage axis over a distance of approx. 0.2 mm to obtain a 0.22 mm long groove. After a groove had been made, the laser discharge was switched off and the rotary stage was stepped over an angle of approx. 2.43°. Subsequently another groove was made and this process was then repeated until a cutting disk was produced with grooves all over its conical sections. In this manner all three cutting disks were processed. The resulting cutting edges had a circular shape with a center-to-center groove distance of approx. 49 µm and a groove width of 28 µm. For one of these cutting disks a height difference was measured with a 100x objective microscope and a calibrated digital camera between the highest and lowest points on the cutting edge of 5.8+/- 0.4 µm. Similar values were found for the other cutting disks. These disks were subsequently used in tests to evaluate their cutting performance on glass plates of 0.5 mm thickness, and substantially decreased lateral cracking, improved straightness of the intermediate cracks, reproducible crack depth and reduced chipping of the glass plate edge were observed with respect to the prior art cutting performance on these plates.

### 5. Cutting disk with 170 evenly spaced grooves and sharp cutting edge using fine-grained, cobalt-bonded sintered diamond

Cutting disk blanks with a continuous peripheral ridge, shaped according to the prior art, were prepared using fine-grained, cobalt-bonded sintered diamond. The size of the diamond grit used was substantially below 1 µm. A plate of this material was first polished to a thickness of 0.5 mm, then cylinders were cut out with a central hole using laser cutting and on each of these cylinders beveled conical sections with a total included angle of 95° were subsequently polished on both sides that intersected at a peripheral ridge. The radius of curvature at the intersection was substantially below 1 µm. The cutting disks had a central hole of 0.8 mm and a diameter of 1.7+/- 0.02 mm. Four of these disks, shaped according to the prior art, were cleaned to remove adhering dust and contamination and subsequently mounted on a shaft with a diameter of 0.78 mm and placed in the rotary stage. Alignment was simply done by searching for the cutting edge of the first disk and centering that cutting edge with respect to the UV-laser image. A mask with a rectangular opening was placed in the light path of the UV laser beam and UV laser light was projected onto the beveled portions of the cutting disk with the incident light being substantially perpendicular to the axial direction of the rotary stage shaft. The laser fluence on the cutting disk surface was approx. 4 J/cm² with a pulse repetition rate of 100 pulses per second. A 25X de-magnifying objective lens was used to project an image of the mask onto the cutting disk. While the laser light was incident on the cutting disks, the cutting disk remained stationary and thus a rectangular shaped groove was obtained with a length of 0.27 mm. After a groove had been made, the laser discharge was switched off and the rotary stage was stepped over an angle of approx. 2.12°. Subsequently another groove was made and this process was then repeated until a cutting disk was produced with grooves all over its conical sections. In this manner all four cutting disks were processed. The resulting cutting edges had a rectangular shape with a center-to-center groove distance of approx. 31 µm. Groove width was 19 µm. For one of these cutting disks a height difference was measured with a 100x objective microscope and a calibrated digital camera between the highest and lowest points on the cutting edge of 3.8 +/-0.3 µm. Similar values were found for the other cutting disks. These disks were subsequently used in tests to evaluate their cutting performance on glass plates of 0.4 mm thickness, and substantially decreased lateral cracking, improved straightness of the intermediate cracks, reproducible crack depth and reduced chipping of the glass plate edge were observed with respect to the prior art cutting performance on these plates.

### 6. Cutting disk with 110 evenly spaced grooves and rounded cutting edge using coarse-grained, cobalt-bonded sintered diamond

Cutting disk blanks with a continuous peripheral ridge, shaped according to the prior art, were prepared using coarse-grained, cobalt-bonded sintered diamond. The size of the diamond grit used was between 2 and 3 µm. A plate of this material was first polished to a thickness of 0.68 mm, then cylinders were cut out with a central hole using laser cutting and on each of these cylinders beveled conical sections with a total included angle of 130° were subsequently ground on both sides that intersected at a peripheral ridge. The radius of curvature at the intersection was substantially below 3 µm. The cutting disks had a central hole of 0.8 mm and a diameter of 2.0+/- 0.02 mm. Three of these disks, shaped according to the prior art, were cleaned to remove adhering dust and contamination and subsequently mounted on a shaft with a diameter of 0.78 mm and placed in the rotary stage. Alignment was simply done by searching for the cutting edge of the middle disk and centering that cutting edge with respect to the UV-laser image. A mask with three circular openings was placed in the light path of the UV laser beam and UV laser light was projected onto the beveled portions of the three cutting disks simultaneously with the incident light being substantially perpendicular to the axial direction of the rotary stage shaft. The laser fluence on the cutting disk surfaces was approx. 4 J/cm² with a pulse repetition rate of 100 pulses per second. A 15X de-magnifying objective lens was used to project an image of the mask onto the cutting disks. While the laser light was incident on the cutting disks, they were translated with a speed of approx. 6 mm/min along a direction parallel to the axis of the rotary stage shaft over a distance of approx. 0.3 mm to obtain a 0.32 mm long groove. After a set of grooves had been made, the laser discharge was switched off and the rotary stage was stepped over an angle of approx. 3.27°. Subsequently another set of grooves was made and this process was then repeated until three cutting disks were produced with grooves all over their conical sections. In this manner the three cutting disks were processed and finished simultaneously. The resulting cutting edges had a circular shape with a center-to-center groove distance of approx. 57 µm. Groove width was 32 µm. For one of these cutting disks a height difference was measured with a 100x objective microscope and a calibrated digital camera between the highest and lowest points on the cutting edge of 9.5 +/-0.8 µm. Similar values were found for the other cutting disks. These disks were subsequently used in tests to evaluate their cutting performance on glass plates of 0.6 mm thickness, and substantially decreased lateral cracking, improved straightness of the intermediate cracks, reproducible crack depth and reduced chipping of the glass plate edge were observed with respect to the prior art cutting performance on these plates.

### 7. Cutting disk with 110 evenly spaced grooves and rounded cutting edge using coarse-grained, cobalt-bonded sintered diamond

Cutting disk blanks with a continuous peripheral ridge, shaped according to the prior art, were prepared using fine-grained, cobalt-bonded sintered diamond. The size of the diamond grit used was between 2 and 3 µm. A plate of this material was first polished to a thickness of 0.68 mm, then cylinders were cut out with a central hole using electric discharge machining and on each of these cylinders beveled conical sections with a total included angle of 130° were subsequently ground on both sides that intersected at a peripheral ridge. The radius of curvature at the intersection was substantially below 3 µm. The cutting disks had a central hole of 0.8 mm and a diameter of 2.0+/- 0.02 mm. Three of these disks, shaped according to the prior art, were cleaned to remove adhering dust and contamination and subsequently mounted on a shaft with a diameter of 0.78 mm and placed in the rotary stage. Alignment was simply done by searching for the cutting edge of the middle disk and centering that cutting edge with respect to the UV-laser image. A mask with three diamond-shaped openings was placed in the light path of the UV laser beam and UV laser light was projected onto the beveled portions of the three cutting disks simultaneously with the incident light being substantially perpendicular to the axial direction of the rotary stage shaft. The laser fluence on the cutting disk surfaces was approx. 4 J/cm² with a pulse repetition rate of 100 pulses per second. A 15X de-magnifying objective lens was used to project an image of the mask onto the cutting disks. While the laser light was incident on the cutting disks, they were translated with a speed of approx. 6 mm/min along a direction parallel to the axis of the rotary stage shaft over a distance of approx. 0.3 mm to obtain a 0.32 mm long groove. After a set of grooves had been made, the laser discharge was switched off and the rotary stage was stepped over an angle of approx. 3.27°. Subsequently another set of grooves was made and this process was then repeated until three cutting disks were produced with grooves all over their conical sections. In this manner the three cutting disks were processed and finished simultaneously. The resulting cutting edges had a triangular shape with a center-to-center groove distance of approx. 57 µm. Groove width was 40 µm. For one of these cutting disks a height difference was measured with a 100x objective microscope and a calibrated digital camera between the highest and lowest points on the cutting edge of 12 +/-1 µm. Similar values were found for the other cutting disks. These disks were subsequently used in tests to evaluate their cutting performance on glass plates of 0.6 mm thickness, and substantially decreased lateral cracking, improved straightness of the intermediate cracks, reproducible crack depth and reduced chipping of the glass plate edge were observed with respect to the prior art cutting performance on these plates:

### 8. Cutting disk with 110 evenly spaced grooves and sharp cutting edge using fine-grained, silicon-carbide bonded cemented diamond

Cutting disk blanks with a continuous peripheral ridge, shaped according to the prior art, were prepared using silicon carbide-bonded cemented diamond. A plate of this material was first polished to a thickness of 0.6 mm, then cylinders were cut out with a central hole using laser cutting and on each of these cylinders beveled conical sections with a total included angle of 120° were subsequently polished on both sides that intersected at a peripheral ridge. The radius of curvature at the intersection was substantially below 1 µm. The cutting disks had a central hole of 0.8 mm and a diameter of 1.8+/- 0.02 mm. Three of these disks, shaped according to the prior art, were cleaned to remove adhering dust and contamination and subsequently mounted on a shaft with a diameter of 0.78 mm and placed in the rotary stage. Alignment was simply done by searching for the cutting edge of the first disk and centering that cutting edge with respect to the UV-laser image. A mask with a circular opening was placed in the light path of the UV laser beam and UV laser light was projected onto the beveled portions of the cutting disk with the incident light being substantially perpendicular to the axial direction of the rotary stage shaft. The laser fluence on the cutting disk surface was approx. 5 J/cm² with a pulse repetition rate of 50 pulses per second. A 15X de-magnifying objective lens was used to project an image of the mask onto the cutting disk. While the laser light was incident on the cutting disks, they were translated with a speed of approx. 2 mm/min along a direction parallel to the axis of the rotary stage shaft over a distance of approx. 0.2 mm to obtain a 0.22 mm long groove. After a groove had been made, the laser discharge was switched off and the rotary stage was stepped over an angle of approx. 3.27°. Subsequently another groove was made and this process was then repeated until a cutting disk was produced with grooves all over its conical sections. In this manner all three cutting disks were processed. The resulting cutting edges had a circular shape with a center-to-center groove distance of approx. 51 µm. Groove width was 32 µm. For one of these cutting disks a height difference was measured with a 100x objective microscope and a calibrated digital camera between the highest and lowest points on the cutting edge of 6.5 +/-0.5 µm. Similar values were found for the other cutting disks. These disks were subsequently used in tests to evaluate their cutting performance on glass plates of 0.5 mm thickness, and substantially decreased lateral cracking, improved straightness of the intermediate cracks, reproducible crack depth and reduced chipping of the glass plate edge were observed with respect to the prior art cutting performance on these plates. In lifetime testing only insignificant wear could be observed in the shape of the wheel and cutting performance of the wheels was unimpaired after extended scribing of glass panels.

Embodiments of cutting disks as described above had the desirable characteristic of producing "clean" scribing cracks similar to those produced by older, continuous rim cutting disks, while still providing a deep enough crack to allow reliable breakage of the scribed body or object after scribing. Embodiments of cutting disks according to the invention also reduced the problems of lateral cracking experienced with prior art toothed cutting disks, as well as reducing chipping and non-straight crack propagation as occurring when using such prior art cutting disks. This can be attributed largely to the continuous, circumferentially extending scribing edge of these disks, with adjacent raised and recessed cutting elements.

The above described method of producing the cutting disks has inherently lower requirements on the accuracy of alignment of the cutting disk blanks with respect to the production apparatus, thus allowing processing of multiple cutting disks without requiring individual alignment of the production equipment for each individual cutting disk. The described method and apparatus also permit the production of cutting disks in a manner which allows for some degree of batch processing, i.e. the manufacture of more than one cutting disk at a time.

Finally it can be noted that the lifetime of both the cutting disks produced according to the above described method as well as of the prior art cutting disks is maximised by suitably tailoring the composition of the preferred sintered or cemented diamond material used to manufacture the disks.

## Claims

1. A cutting disk for forming a scribed line on a surface of a body or object, the cutting disk comprising a generally disk shaped body (10) having a peripheral portion comprising first and second circumferentially extending tapered surfaces (81, 20) that converge radially outwardly, the peripheral portion defining a scribing edge (22) having adjacent raised and recessed circumferentially extending cutting elements (30, 26), **characterized in that** a plurality of outwardly extending grooves (24) are formed in the first and second tapered surfaces (18,20), the outer ends of opposed grooves (24) in the respective tapered surfaces (18, 20) being aligned to define between them the recessed cutting elements (26) such that the scribing edge (22) is a continuous sharp edge having alternating raised and recessed cutting elements (30, 26), aligned circumferentially with one another.

2. A cutting disk according to claim 1 which is suitable for scribing a line on a glass body, a semiconductor, a gem stone, a body of crystalline material or a ceramic body.

3. A cutting disk according to claim 1 or claim 2 wherein the outwardly extending grooves (24) are aligned radially.

4. A cutting disk according to claim 1 or claim 2 wherein the outwardly extending grooves (24) are inclined relative to a radius of the cutting disk.

5. A cutting disk according to any one of claims 1 to 4 wherein the grooves (24) are of equal width and depth.

6. A cutting disk according to any one of claims 1 to 4 wherein the grooves (24) have varying widths and/or depths.

7. A cutting disk according to any one of claims 1 to 6 wherein the spacing between adjacent grooves (24) is regular.

8. A cutting disk according to any one of claims 1 to 6 wherein the spacing between adjacent grooves (24) is irregular.

9. A cutting disk according to any one of claims 1 to 8 wherein the grooves (24) have a depth which increases in a direction radially outwardly towards the periphery of the cutting disk, with the grooves (24) having a maximum depth adjacent the recessed cutting elements (26).

10. A cutting disk according to any one of claims 1 to 9 wherein the width of the grooves (24) is constant along their length.

11. A cutting disk according to any one of claims 1 to 9 wherein the width of the grooves (24) varies along their length.

12. A cutting disk according to claim 11 wherein the material of the opposed tapered surfaces at the periphery of the disk is removed selectively to define raised cutting edges having a curved profile, so that the overall scribing edge (22) of the cutting disk has a sinuous profile.

13. A cutting disk according to claim 12 wherein the sinuous profile corresponds in shape to a sine wave or another periodic shape.

14. A cutting disk according to any one of claims 1 to 13 comprising sintered or cemented diamond grit.

15. A cutting disk according to claim 14 comprising diamond grit with a size smaller than 3 µm.

16. A cutting disk according to any one of claims 1 to 13 comprising single crystal diamond.

17. A cutting disk according to any one of claims 1 to 13 comprising polycrystalline diamond.

18. A method of manufacturing a cutting disk for forming a scribed line on a surface of a body or object, the method comprising:
supporting a disk shaped blank (64) having a peripheral portion comprising first and second circumferentially extending tapered surfaces (18, 20) that converge radially outwardly;
generating a focused light beam from a laser source (54);
masking the light beam according to a predetermined cutting pattern; and
focusing the light beam onto the blank (64);
**characterized in that** the blank and the light beam are moved relative to one another to cause the light beam to form a plurality of outwardly extending grooves (24) in the first and second tapered surfaces (18, 20), the outer ends of opposed grooves (24) in the respective tapered surfaces (18, 20) being aligned to define between them recessed cutting elements (26) with raised cutting elements (30) between them so that the peripheral portion of the cutting disk defines a continuous sharp scribing edge (22) having adjacent, alternating raised and recessed circumferentially extending cutting elements (30, 26), aligned circumferentially with one another.

## Patentansprüche

1. Eine Schneidescheibe zum Bilden einer geritzten Linie auf einer Oberfläche eines Körpers oder eines Objektes, wobei die Schneidescheibe einen im Allgemeinen scheibenförmigen Körper (10) aufweist, welcher einen peripheren Teil hat, welcher eine erste und eine zweite sich umfangsmäßig erstreckende schräge Oberflächen (81, 20) aufweist, welche radial nach außen konvergieren, wobei der periphere Teil eine Ritz-Kante (22) definiert, welche benachbarte erhabene und zurückgesetzte sich umfangsmäßig erstreckende Schneide-Elemente (30, 26) hat, dadurch charakterisiert, dass eine Mehrzahl von sich nach außen erstreckenden Kerben (24) in der ersten und der zweiten schrägen Oberfläche (18, 20) gebildet sind, wobei die äußeren Enden von gegenüberliegenden Kerben (24) in den jeweiligen schrägen Oberflächen (18, 20) ausgerichtet sind, um zwischen ihnen die zurückgesetzten Schneide-Elemente (26) derart zu definieren, dass die Ritz-Kante (22) eine kontinuierliche scharfe Kante ist, welche alternierende erhabene und zurückgesetzte Schneide-Elemente (30, 26) hat, welche umfangsmäßig aufeinander ausgerichtet sind.

2. Schneidescheibe gemäß Anspruch 1, welche zum Ritzen einer Linie auf einem Glaskörper, einem Halbleiter, einem Edelstein, einem Körper von kristallinem Material oder einem Keramikkörper geeignet ist.

3. Schneidescheibe gemäß Anspruch 1 oder 2, wobei die sich nach außen erstreckenden Kerben (24) radial ausgerichtet sind.

4. Schneidescheibe gemäß Anspruch 1 oder 2, wobei die sich nach außen erstreckenden Kerben (24) relativ zu einem Radius der Schneidescheibe geneigt sind.

5. Schneidescheibe gemäß einem der Ansprüche 1 bis 4, wobei die Kerben (24) von gleicher Breite und Tiefe sind.

6. Schneidescheibe gemäß einem der Ansprüche 1 bis 4, wobei die Kerben (24) variierende Breiten und/oder Tiefen haben.

7. Schneidescheibe gemäß einem der Ansprüche 1 bis 6, wobei der Abstand zwischen benachbarten Kerben (24) regulär ist.

8. Schneidescheibe gemäß einem der Ansprüche 1 bis 6, wobei der Abstand zwischen benachbarten Kerben (24) irregulär ist.

9. Schneidescheibe gemäß einem der Ansprüche 1 bis 8, wobei die Kerben (24) eine Tiefe haben, welche in einer Richtung radial nach außen zu der Peripherie der Schneidescheibe hin zunimmt, wobei die Kerben (24) eine Maximal-Tiefe angrenzend an die zurückgesetzten Schneide-Elemente (26) haben.

10. Schneidescheibe gemäß einem der Ansprüche 1 bis 9, wobei die Breite der Kerben (24) entlang ihrer Länge konstant ist.

11. Schneidescheibe gemäß einem der Ansprüche 1 bis 9, wobei die Breite der Kerben (24) entlang ihrer Länge variiert.

12. Schneidescheibe gemäß Anspruch 11, wobei das Material der gegenüberliegenden schrägen Oberflächen bei der Peripherie der Scheibe selektiv entfernt ist, um erhabene Schneide-Kanten, welche ein gekrümmtes Profil haben, so zu definieren, dass die Gesamt-Ritz-Kante (22) der Schneidescheibe ein gewundenes Profil hat.

13. Schneidescheibe gemäß Anspruch 12, wobei das gewundene Profil in Form einer Sinus-Welle oder einer anderen periodischen Form entspricht.

14. Schneidescheibe gemäß einem der Ansprüche 1 bis 13, gesinterten oder zementierten Diamant-Splitt aufweisen.

15. Schneidescheibe gemäß Anspruch 14, Diamant-Splitt mit einer Größe kleiner als 3 µm aufweisen.

16. Schneidescheibe gemäß einem der Ansprüche 1 bis 13, Einzel-Kristall-Diamant aufweisend.

17. Schneidescheibe gemäß einem der Ansprüche 1 bis 13, polykristallinen Diamant aufweisend.

18. Verfahren zum Herstellen einer Schneidescheibe zum Bilden einer geritzten Linie auf einer Oberfläche eines Körpers oder eines Objekts, wobei das Verfahren aufweist:
Unterstützen eines scheibenförmigen Rohlings (64), welcher einen peripheren Teil hat, welcher eine erste und eine zweite sich umfangsmäßig erstreckende schräge Oberflächen (18, 20) aufweist, welche radial nach außen konvergieren;
Erzeugen eines fokussierten Lichtstrahls von einer Laser-Quelle (54);
Maskieren des Lichtstrahls gemäß eines vorbestimmten Schneide-Musters; und
Fokussieren des Lichtstrahls auf dem Rohling (64);
dadurch charakterisiert, dass der Rohling und der Lichtstrahl relativ zueinander bewegt werden, um zu bewirken, dass der Lichtstrahl eine Mehrzahl von sich nach außen erstreckenden Kerben (24) in der ersten und der zweiten schrägen Oberflächen (18, 20) bildet, wobei die äußeren Enden von gegenüberliegenden Kerben (24) in den jeweiligen schrägen Oberflächen (18, 20) ausgerichtet sind, um zwischen ihnen zurückgesetzte Schneide-Elemente (26) mit erhabenen Schneide-Elementen (30) zwischen ihnen so zu definieren, dass der periphere Teil der Schneidescheibe eine kontinuierliche scharfe Ritz-Kante (22) definiert, welche benachbarte, alternierende erhabene und zurückgesetzte sich umfangsmäßig erstreckende Schneide-Elemente (30, 26) hat, welche umfangsmäßig aufeinander ausgerichtet sind.

## Revendications

1. Disque de coupe servant à former une ligne de traçage sur une surface d'un corps ou d'un objet, le disque de coupe comprenant un corps généralement en forme de disque (10) comportant une partie périphérique présentant une première et une seconde surfaces circonférentielles coniques (18, 20) convergeant radialement vers l'extérieur, la partie périphérique définissant un bord de traçage (22) présentant des éléments de coupe en relief et en creux (30, 26) adjacents, disposés sur la circonférence, **caractérisé en ce qu'**une pluralité de rainures (24) s'étendant vers l'extérieur est formée dans la première et la seconde surfaces coniques (18, 20), les extrémités externes des rainures opposées (24) dans les surfaces coniques (18, 20) correspondantes étant alignées afin de définir entre elles les éléments de coupe en creux (26) de sorte que le bord de traçage (22) est un bord tranchant continu comprenant des éléments de coupe alternativement en relief et en creux, alignés les uns aux autres dans le sens de la circonférence.

2. Disque de coupe suivant la revendication 1 qui est approprié pour tracer une ligne sur un corps en verre, un semi-conducteur, une pierre précieuse, un corps en matière cristalline ou un corps céramique.

3. Disque de coupe suivant la revendication 1 ou 2, dans lequel les rainures (24) s'étendant vers l'extérieur sont alignées radialement.

4. Disque de coupe suivant la revendication 1 ou 2, dans lequel les rainures (24) s'étendant vers l'extérieur sont inclinées par rapport à un rayon du disque de coupe.

5. Disque de coupe suivant une quelconque des revendications 1 à 4, dans lequel les rainures (24) sont de largeur et de profondeur égales.

6. Disque de coupe suivant une quelconque des revendications 1 à 4, dans lequel les rainures (24) présentent des largeurs et/ou profondeurs qui varient.

7. Disque de coupe suivant une quelconque des revendications 1 à 4, dans lequel l'espacement entre les rainures (24) adjacentes est régulier.

8. Disque de coupe suivant une quelconque des revendications 1 à 6, dans lequel l'espacement entre les rainures (24) adjacentes est irrégulier.

9. Disque de coupe suivant une quelconque des revendications 1 à 8, dans lequel les rainures (24) ont une profondeur qui augmente radialement vers l'extérieur en direction de la périphérie du disque de coupe, la profondeur maximale des rainures (24) étant adjacente aux éléments de coupe en creux (26).

10. Disque de coupe suivant une quelconque des revendications 1 à 9, dans lequel la largeur des rainures (24) est constante sur leur longueur.

11. Disque de coupe suivant une quelconque des revendications 1 à 9, dans lequel la largeur des rainures (24) varie sur leur longueur.

12. Disque de coupe suivant la revendication 11, dans lequel la matière des surfaces coniques opposées à la périphérie du disque est enlevée sélectivement, afin de définir des bords tranchants en relief présentant un profil courbé, de sorte que l'ensemble du bord de traçage (22) du disque de coupe présente un profil sinueux.

13. Disque de coupe suivant la revendication 12, dans lequel la forme du profil sinueux correspond à une onde sinusoïdale ou à une autre forme d'onde périodique.

14. Disque de coupe suivant une quelconque des revendications 1 à 13 comprenant de la poudre de diamant fritté ou cémenté.

15. Disque de coupe suivant la revendication 14 comprenant de la poudre de diamant avec une grosseur inférieure à 3µm.

16. Disque de coupe suivant une quelconque des revendications 1 à 13 comprenant du diamant monocristallin.

17. Disque de coupe suivant une quelconque des revendications 1 à 13 comprenant du diamant polycrystallin.

18. Procédé de fabrication d'un disque de coupe servant à former une ligne de traçage sur une surface d'un corps ou d'un objet, le procédé consistant à:
supporter un flan (64) en forme de disque, dont la partie périphérique présente une première et une seconde surfaces (18, 20) circonférentielles coniques convergeant radialement vers l'extérieur,
générer un faisceau de lumière focalisé depuis une source laser (54),
masquer le faisceau de lumière selon un motif de découpe prédéterminé, et
focaliser le faisceau de lumière sur le flan (64),
**caractérisé en ce que** le flan et le faisceau de lumière sont déplacés l'un par rapport à l'autre afin que le faisceau de lumière forme dans la première et la seconde surfaces coniques (18, 20) une pluralité de rainures (24) s'étendant vers l'extérieur, les extrémités externes des rainures opposées (24) dans les surfaces coniques (18, 20) correspondantes étant alignées de façon à définir entre elles des éléments de coupe en creux (26) avec des éléments de coupe en relief entre eux, de sorte que la partie périphérique du disque de coupe définit un bord de traçage (22) tranchant continu présentant des éléments de coupe adjacents, alternativement en relief et en creux, qui sont alignés les uns aux autres dans le sens de la circonférence.
